# EUROPÄISCHE PATENTANMELDUNG

(11) **EP 1 058 040 A2**
(43) Veröffentlichungstag der Anmeldung: **06.12.2000**
(21) Anmeldenummer: 00106500.2
(22) Anmeldetag: 25.03.2000
(51) Int. Cl.: F16L 3/237

(54) **Zweirohrschelle**

(30) Priorität: 05.06.1999 DE 19925772
(71) Anmelder: HYDAC Befestigungstechnik GmbH, 66125 Saarbrücken-Dudweiler (DE)
(72) Erfinder: Borzucki, Roman, Dipl.-Ing., 66822 Lebach (DE)
(74) Vertreter: Patentanwälte Bartels und Partner

(57) **Zusammenfassung**

Bei einer Zweirohrschelle mit zwei ein Klemmbackenpaar bildenden Klemmkörpern (1 und 3), die zwischen sich zwei Durchgänge (7) für je einen rohrförmigen Körper bilden und durch zumindest eine Spannschraube (13) aneinander andrückbar sind, die sich zwischen den Durchgängen (7) von einer kopfseitigen Deckplatte (9) zu einer Fußplatte (11) erstreckt, zwischen denen das Klemmbackenpaar aufgenommen ist, ist jeder Klemmkörper (1, 3) von einer eine äußere Armierung bildenden Sicherungsleiste (17) eingefaßt, die sich mit einem zentralen Abschnitt (19) zwischen Deckplatte (9) bzw. Fußplatte (11) des betreffenden Klemmkörpers (1 bzw. 3) und mit abgebogenen endseitigen Schenkeln (18) längs den jeweiligen, von den Durchgängen (7) freien Seitenflächen der Klemmkörper (1, 3) erstrecken, und die Länge dieser Schenkel (18) ist so bemessen, daß sich ihre einander zugekehrten Enden (23) beim Andrücken der Klemmkörper (1, 3) zur Begrenzung der Klemmkraft aneinander abstützen.

## Beschreibung

Die Erfindung bezieht sich auf eine Zweirohrschelle mit zwei ein Klemmbackenpaar bildenden Klemmkörpern, die zwischen sich zwei Durchgänge für je einen rohrförmigen Körper bilden und durch zumindest eine Spannschraube aneinander andrückbar sind, die sich zwischen den Durchgängen von einer kopfseitigen Deckplatte zu einer Fußplatte erstreckt, zwischen denen das Klemmbackenpaar aufgenommen ist.

Rohrschellen dieser Art sind handelsüblich, siehe DIN 3015, Teil 3. Bei Rohrschellen dieser Bauart kommen für die Herstellung der die Klemmbacken bildenden Kunststoffkörper nur festere Werkstoffe in Frage, beispielsweise Polypropylenkunststoffe oder PA-Materialien, weil die aus dem Anzugsmoment der Spannschraube resultierende Kraft unmittelbar auf die Klemmkörper und die eingespannten Rohre oder anderweitigen Leitungsstränge übertragen wird. Durch das Fehlen einer Begrenzungseinrichtung für das Anzugsmoment wäre bei wenig formstabilen Werkstoffen die Gefahr der Verformung oder Beschädigung des Klemmbackenpaares durch zu hohes Anzugsmoment gegeben. Andererseits bestünde die Gefahr, daß es bei zu niedrigem Anzugsmoment zu einem seitlichen Herausbrechen der geklemmten Rohre kommen könnte.

Die Verwendung festerer Werkstoffe für die Klemmkörper ist jedoch wegen der damit verbundenen, schlechten Schall- und/oder Vibrationsdämpfung nachteilig. Außerdem besteht die Gefahr, daß empfindliche Rohre oder anderweitige Leitungsstränge durch Einspannen zwischen harten Kunststoffkörpern beschädigt werden.

Der Erfindung liegt die Aufgabe zugrunde, eine Zweirohrschelle der betrachteten Bauart zu schaffen, die sich gegenüber dem Stand der Technik durch verbesserte Betriebseigenschaften auszeichnet.

Bei einer Zweirohrschelle der eingangs genannten Art ist diese Aufgabe erfindungsgemäß dadurch gelöst, daß jeder Klemmkörper von einer eine äußere Armierung bildenden Sicherungsleiste eingefaßt ist, die sich in einem zentralen Abschnitt zwischen Deckplatte bzw. Fußplatte des betreffenden Klemmkörpers und mit abgebogenen endseitigen Schenkeln längs den jeweiligen, von den Durchgängen freien Seitenflächen der Klemmkörper erstrecken, und daß die Länge dieser Schenkel so bemessen ist, daß sich ihre einander zugekehrten Enden beim Andrücken der Klemmkörper zur Begrenzung der Klemmkraft aneinander abstützen.

Durch die erfindungsgemäß vorgesehene Einfassung des Klemmbackenpaares eröffnet sich die Möglichkeit der Anwendung weicherer Werkstoffe für das Klemmbackenpaar, ohne daß eine Gefahr des seitlichen Herausbrechens der Rohre oder anderweitigen Stränge bei Belastung bestünde. Außerdem ergeben sich die gewünschten guten Dämpfungseigenschaften. Dadurch, daß die Sicherungsleisten, in zusätzlicher Funktion, durch das Zusammenwirken ihrer endseitigen Schenkel eine Einrichtung zur Klemmkraftbegrenzung bilden, ist auch die Gefahr einer Deformierung oder Beschädigung des Klemmbackenpaares aufgrund einer aus übermäßigem Anzugsmoment der Spannschraube resultierenden Kraft vermieden.

Vorzugsweise sind die Sicherungsleisten durch ein C-förmig gebogenes Metallblech, vorzugsweise Stahlblech, gebildet.

Als Werkstoff für die Klemmkörper kann ein thermoplastischer Elastomer, beispielsweise synthetischer Kautschuk, vorgesehen sein, wobei die Shore Härte vorzugsweise im Bereich von etwa 50 bis 75 liegt.

Die erfindungsgemäße Zweirohrschelle kann mit einer als Anschweißplatte dienenden Fußplatte versehen sein, an deren Innenseite die für die Zusammenwirkung mit der Spannschraube vorgesehene Mutter angebracht ist.

Alternativ kann die Fußplatte durch eine Tragschiene in Form eines Hohlprofils mit Längsschlitz gebildet sein. In diesem Falle wirkt die Spannschraube mit einer Tragschienenmutter zusammen, die sich durch den Längsschlitz aus dem Innenraum des Hohlprofils erstreckt, in dem ein Bajonettfuß der Tragschienenmutter aufgenommen ist.

Nachstehend ist die Erfindung anhand eines in der Zeichnung dargestellten Ausführungsbeispieles im einzelnen erläutert.

Es zeigen:
- Fig. 1: eine auseinandergezogen gezeichnete Vorderansicht des Ausführungsbeispieles der Zweirohrschelle mit einer Fußplatte in Form einer Anschweißplatte;
- Fig. 2: eine Vorderansicht der Rohrschelle von Fig. 1 in zusammengebautem Zustand und
- Fig. 3: eine Draufsicht der Rohrschelle von Fig. 1 und 2.

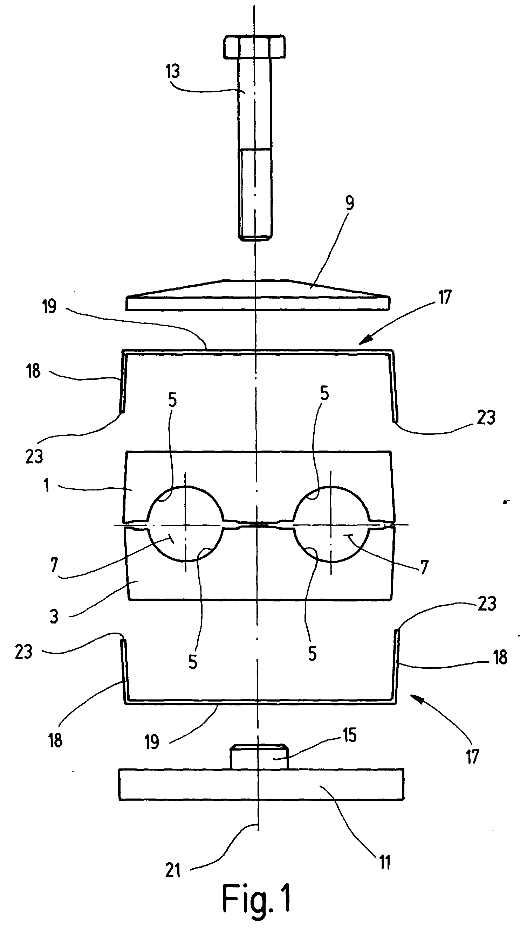

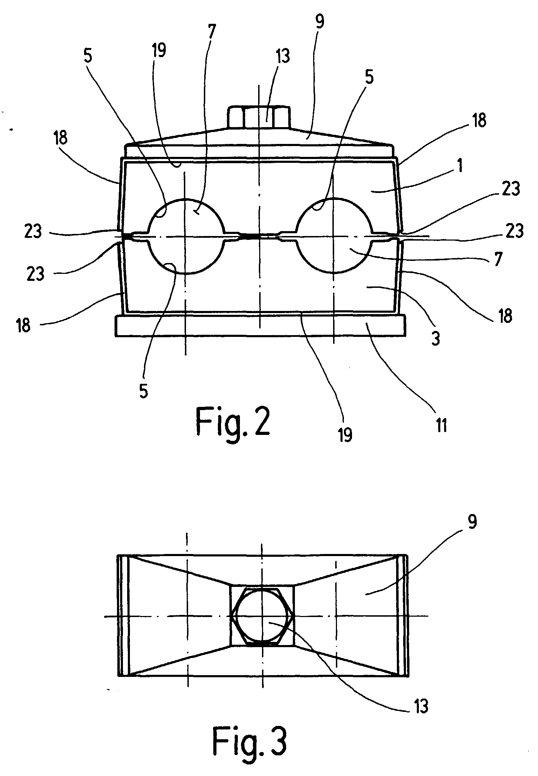

In den Figuren sind die ein Klemmbackenpaar bildenden Klemmkörper mit 1 und 3 bezeichnet, die aus einem thermoplastischen Elastomer hergestellt, je gleich ausgebildet und so geformt sind, daß sie im zusammengesetzten Zustand, der in Figuren 1 und 2 gezeigt ist zwischen sich zwei durch Ausnehmungen 5 gebildete Durchgänge 7 begrenzen, die nebeneinanderliegend angeordnet und zur Aufnahme je eines rohrförmigen Körpers (nicht gezeigt) vorgesehen sind. Hierbei kann es sich um Rohre, Schläuche oder anderweitige Leitungsstränge handeln. Das aus den Klemmkörpern 1 und 3 gebildete Klemmkörperpaar ist zwischen einer oberen Deckplatte 9 und einer unteren Fußplatte 11 aufgenommen. Eine Spannschraube 13 mit Außensechskantkopf erstreckt sich durch eine Bohrung im Zentralbereich der Deckplatte 9 und eine hierzu fluchtende, nicht gezeigte Durchgangsöffnung in den Klemmkörpern 1 und 3 hindurch bis zu einer Spannmutter 15, die an der dem Klemmbackenpaar zugewandten Innenseite der Fußplatte 11 befestigt ist.

Zwischen der Deckplatte 9 und der zugewandten Fläche des Klemmkörpers 1 sowie zwischen der Fußplatte 11 und der zugewandten Fläche des Klemmkörpers 3 befindet sich jeweils eine Sicherungsleiste 17 aus Metallblech. In ihrem zentralen Abschnitt 19, der sich längs der Deckplatte 9 bzw. der Fußplatte 11 erstreckt befindet sich in auf die Achse 21 der Spannschraube 13 ausgerichteter Lage ein Durchbruch, der aus der Zeichnung nicht zu ersehen ist und den Durchtritt der Spannschraube 13 bzw. der Spannmutter 15 durch das jeweilige Sicherungsblech 17 ermöglicht.

Die beiden gleich ausgebildeten Sicherungsbleche 17 weisen an beiden Enden des zentralen Abschnittes 19 abgebogene, endseitige Schenkel 18 auf, die bei dem zusammengesetzten Zustand der Rohrschelle, wie in Fig. 2 gezeigt, eine seitliche Einfassung der Klemmkörper 1 und 3 bilden, indem sie passend an denjenigen Seitenflächen der Klemmkörper 1 und 3 anliegen, die zu den die Durchgänge 7 aufweisenden Stirnflächen senkrecht sind. Die Länge der Schenkel 18 der beim Ausführungsbeispiel aus Stahlblech gebildeten Sicherungsleisten 17 ist so bemessen, daß der in Fig. 2 gezeigte Spalt zwischen den einander zugekehrten Enden 23 der Schenkel 18 dann geschlossen wird, wenn beim Anziehen der Spannschraube 13 ein Anzugsmoment erreicht ist, bei dem die elastomeren Klemmkörper 1 und 3 in gewünschtem Ausmaße zusammengedrückt sind. Mit anderen Worten gesagt, stoßen die Enden 23 beider Sicherungsleisten 17 aufeinander, sobald das Anzugsmoment der Spannschraube 13 zu einer definierten Vorspannung des Klemmbackenpaares geführt hat, und begrenzen die Spannung bei Erreichen dieses Zustandes. In Verbindung mit dem elastomeren Werkstoff des Klemmbackenpaares läßt sich so eine optimale Klemmung der rohrförmigen Körper in den Durchgängen 7 sicherstellen, bei der eine Gefahr der Beschädigung empfindlicher Rohre oder Stränge vermieden ist. Durch die seitliche Einfassung oder Armierung des Klemmbackenpaares ist gleichzeitig die Gefahr eines seitlichen Herausbrechens der eingespannten Rohre oder Stränge vermieden, selbst wenn weiche Werkstoffe für das Kemmbackenpaar verwendet werden, beispielsweise thermoplastische Elastomere mit Shore Härten im Bereich von etwa 50 bis 75. Somit ergeben sich auch sehr gute Dämpfungseigenschaften, sowohl hinsichtlich von Schwingungen als auch Geräuschen.

Beim gezeigten Ausführungsbeispiel ist die Fußplatte 11 in Form einer Anschweißplatte mit an ihr fest angebrachter Spannmutter 15 ausgebildet. Alternativ könnte die Fußplatte durch eine zur Aufhängung der Rohrschelle vorgesehene Tragschiene in Form einer Profilschiene gebildet sein, die einen inneren Hohlraum besitzt, der durch einen Längsschlitz geöffnet ist. In diesem Falle ist die mit der Spannschraube 13 zusammenwirkende Spannmutter in der bei Rohrschellen an sich bekannten Weise mit einem im Innenraum des Hohlprofils aufnehmbaren und verankerbaren Bajonettfuß versehen und erstreckt sich aus dem Innenraum der Tragschiene durch deren Längsschlitz nach außen, um den Durchbruch im zentralen Abschnitt 19 der benachbarten Sicherungsschiene 17 zu durchgreifen.

## Patentansprüche

1. Zweirohrschelle mit zwei ein Klemmbackenpaar bildenden Klemmkörpern (1 und 3), die zwischen sich zwei Durchgänge (7) für je einen rohrförmigen Körper bilden und durch zumindest eine Spannschraube (13) aneinander andrückbar sind, die sich zwischen den Durchgängen (7) von einer kopfseitigen Deckplatte (9) zu einer Fußplatte (11) erstreckt, zwischen denen das Klemmbackenpaar aufgenommen ist, dadurch gekennzeichnet, daß jeder Klemmkörper (1, 3) von einer eine äußere Armierung bildenden Sicherungsleiste (17) eingefaßt ist, die sich mit einem zentralen Abschnitt (19) zwischen Deckplatte (9) bzw. Fußplatte (11) des betreffenden Klemmkörpers (1 bzw. 3) und mit abgebogenen endseitigen Schenkeln (18) längs den jeweiligen, von den Durchgängen (7) freien Seitenflächen der Klemmkörper (1, 3) erstrecken, und daß die Länge dieser Schenkel (18) so bemessen ist, daß sich ihre einander zugekehrten Enden (23) beim Andrücken der Klemmkörper (1, 3) zur Begrenzung der Klemmkraft aneinander abstützen.

2. Zweirohrschelle nach Anspruch 1, dadurch gekennzeichnet, daß die Sicherungsleisten (17) durch ein C-förmig gebogenes Metallblech, vorzugsweise Stahlblech, gebildet sind.

3. Zweirohrschelle nach Anspruch 1 oder 2, dadurch gekennzeichnet, daß die Klemmkörper (1, 3) aus einem thermoplastischen Elastomer geformt sind.

4. Zweirohrschelle nach Anspruch 3, dadurch gekennzeichnet, daß die Klemmkörper (1, 3) eine Shore Härte im Bereich von etwa 50 bis etwa 75 besitzen.

5. Zweirohrschelle nach einem der Ansprüche 1 bis 4, dadurch gekennzeichnet, daß die Fußplatte (11) als die Befestigung der Zweirohrschelle durch Schweißen ermöglichende Anschweißplatte mit an ihrer Innenseite angebrachter Mutter (15) zur Zusammenwirkung mit der Spannschraube (13) ausgebildet ist.

6. Zweirohrschelle nach einem der Ansprüche 1 bis 4, dadurch gekennzeichnet, daß die Fußplatte durch eine Tragschiene in Form eines Hohlprofils mit Längsschlitz gebildet ist, durch den sich eine Tragschienenmutter aus dem Innenraum des Hohlprofils erstreckt, in dem ein Bajonettfuß der Tragschienenmutter aufgenommen ist.
